# EUROPEAN PATENT APPLICATION

(11) **EP 4 672 438 A1**
(43) Date of publication of application: **31.12.2025**
(21) Application number: 25153319.6
(22) Date of filing: 22.01.2025
(51) Int. Cl.: H01M 50/107, H01M 50/152, H01M 50/342, H01M 50/578

(54) **SECONDARY BATTERY AND BATTERY PACK INCLUDING THE SAME**

(30) Priority: 26.06.2024 KR 20240083445
(71) Applicant: SAMSUNG SDI CO., LTD., Yongin-si, Gyeonggi-do 17084 (KR)
(72) Inventor: KIM, Dae Kyu, 16678 Suwon-si (KR); PARK, Jong Jun, 16678 Suwon-si (KR); SEO, Kwang Soo, 16678 Suwon-si (KR); KIM, Shin Jung, 16678 Suwon-si (KR)
(74) Representative: Marks & Clerk LLP

(57) **Abstract**

A secondary battery (2) includes a case (100) having an opening, an electrode assembly (200) accommodated in the case, a cap-up (310) disposed in the opening, a cap-down (320) disposed to face the cap-up and connected to the electrode assembly, a vent plate (330) disposed between the cap-up and the cap-down, an extension part (340) extending from the vent plate and connected to the cap-up, and a contact part (350) that protrudes from the vent plate toward the cap-down and is in contact with the cap-down, wherein a thickness of at least a portion of the vent plate increases toward a central axis of the case.

## Description

### BACKGROUND

### 1. Field

Embodiments relate to a secondary battery and a battery pack including the same.

### 2. Description of Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure is only intended to improve understanding of the background of the present disclosure, and thus may include information that does not constitute the related art.

### SUMMARY

Embodiments include a secondary battery including a case having an opening, an electrode assembly accommodated in the case, a cap-up in the opening, a cap-down facing the cap-up and connected to the electrode assembly, a vent plate between the cap-up and the cap-down, an extension part extending from the vent plate and connected to the cap-up, and a contact part that protrudes from the vent plate towards the cap-down and that is in contact with the cap-down, wherein a thickness of at least a portion of the vent plate increases toward a central axis of the case.

The vent plate may face the cap-up and may include an upper inclined surface that is inclined with respect to a radial direction of the case.

An angle of the upper inclined surface with respect to the radial direction of the case may range from 1° to 2°.

The upper inclined surface may include a first upper edge, and a second upper edge between, e.g. disposed between, the central axis of the case and the first upper edge, wherein a distance between the upper inclined surface and the cap-up may decrease from the first upper edge toward the second upper edge.

The extension part may include a support part that surrounds, e.g. disposed to surround, an end portion of the cap-up, and a hinge part between, e.g. disposed between, the support part and the vent plate, wherein the first upper edge may be connected to the hinge part.

A ratio of a width of the upper inclined surface to a distance from the central axis of the case to the hinge part may range from 0.5 to 1, and the width of the upper inclined surface may be a difference between a distance from the central axis of the case to the first upper edge and a distance from the central axis of the case to the second upper edge.

The width of the upper inclined surface may be greater than or equal to 3 mm and less than or equal to 6 mm.

The secondary battery may further include a notch that is concave from an outer side surface of the vent plate, wherein a distance from the central axis of the case to the first upper edge may be less than or equal to a distance from the central axis of the case to the notch.

A ratio of a width of the upper inclined surface to the distance from the central axis of the case to the notch may range from 0.5 to 1, and the width of the upper inclined surface may be a difference between the distance from the central axis of the case to the first upper edge and a distance from the central axis of the case to the second upper edge.

The width of the upper inclined surface may be greater than or equal to 2 mm and less than or equal to 5 mm.

The secondary battery may further include a guide notch that is, e.g. formed to be, concave from the upper inclined surface and spaced apart from the notch.

A distance from the central axis of the case to the guide notch may be less than the distance from the central axis of the case to the notch.

The vent plate may include a first rupture part facing the notch, and a second rupture part facing the guide notch, wherein a thickness of the second rupture part may be greater than a thickness of the first rupture part.

A ratio of the thickness of the first rupture part to the thickness of the second rupture part may range from 0.4 to 0.8.

The thickness of the second rupture part may be greater than or equal to 0.1 mm and less than or equal to 0.2 mm.

The vent plate may face the cap-down and may include a lower inclined surface that is, e.g. disposed to be, inclined with respect to a radial direction of the case.

The secondary battery may further include a recess that is, e.g. formed to be, concave from the vent plate toward the contact part.

Embodiments include a battery pack including a housing, and a plurality of secondary batteries in the housing, wherein each of the secondary batteries includes a case having an opening, an electrode assembly accommodated in the case, a cap-up in the opening, a cap-down facing the cap-up and connected to the electrode assembly, a vent plate between the cap-up and the cap-down, an extension part extending from the vent plate and connected to the cap-up, and a contact part that protrudes from the vent plate toward the cap-down and is in contact with the cap-down, wherein a thickness of at least a portion of the vent plate increases toward a central axis of the case.

These and other aspects and features of the present disclosure will be described in or will be apparent from the following description of some embodiments of the present disclosure.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a perspective view schematically illustrating a configuration of a battery pack according to various embodiments of the present disclosure;
FIG. 2 is a perspective view schematically illustrating a configuration of a secondary battery according to a first embodiment of the present disclosure;
FIG. 3 is a cross-sectional view schematically illustrating a configuration of the secondary battery according to the first embodiment of the present disclosure;
FIG. 4 is an enlarged view schematically illustrating a configuration of a cap assembly according to the first embodiment of the present disclosure;
FIG. 5 is an enlarged view schematically illustrating a configuration of a vent plate according to the first embodiment of the present disclosure;
FIG. 6 is an enlarged view schematically illustrating an angle of an upper inclined surface according to the first embodiment of the present disclosure;
FIG. 7 is a cross-sectional view schematically illustrating a configuration of a cap assembly according to a second embodiment of the present disclosure;
FIG. 8 is an enlarged view schematically illustrating a configuration of a vent plate according to the second embodiment of the present disclosure;
FIG. 9 is a cross-sectional view schematically illustrating a configuration of a cap assembly according to a third embodiment of the present disclosure;
FIG. 10 is an enlarged view schematically illustrating a configuration of a vent plate according to the third embodiment of the present disclosure;
FIG. 11 is a cross-sectional view schematically illustrating a configuration of a cap assembly according to a fourth embodiment of the present disclosure;
FIG. 12 is an enlarged view schematically illustrating a configuration of a vent plate according to the fourth embodiment of the present disclosure;
FIG. 13 is an enlarged view schematically illustrating a configuration of a first rupture part and a second rupture part according to the fourth embodiment of the present disclosure;
FIG. 14 is a cross-sectional view schematically illustrating a configuration of a cap assembly according to a fifth embodiment of the present disclosure;
FIG. 15 is an enlarged view schematically illustrating a configuration of a vent plate according to the fifth embodiment of the present disclosure;
FIG. 16 is a cross-sectional view schematically illustrating a configuration of a cap assembly according to a sixth embodiment of the present disclosure; and
FIG. 17 is an enlarged view schematically illustrating a configuration of a vent plate according to the sixth embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

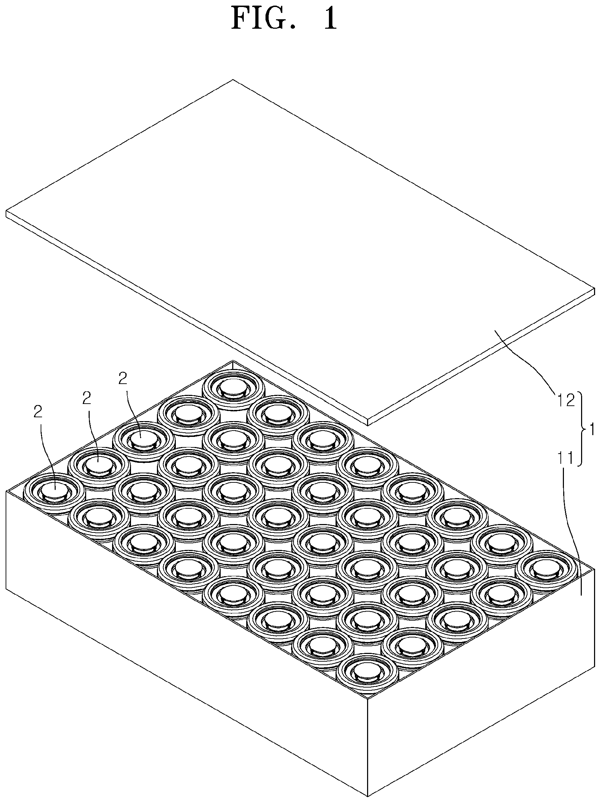

FIG. 1 is a perspective view schematically illustrating a configuration of a battery pack according to various embodiments of the present disclosure.

Referring to FIG. 1, the battery pack according to various embodiments may include a housing 1, and secondary batteries 2.

The housing 1 may form an exterior of the battery pack and provide a space in which the secondary batteries 2 may be accommodated.

The housing 1 according to the present embodiment may include a housing body 11 and a cover 12.

The housing body 11 may be formed to have a box shape with an empty interior and one open side. A cross-sectional shape of the housing body 11 is not limited to a quadrangular shape shown in FIG. 1, and may be changed in design to have various shapes such as a polygonal shape, a circular shape, and an oval shape.

The cover 12 may be coupled to the housing body 11 and may close an internal space of the housing body 11. As an example, the cover 12 may have, e.g. may be formed to have, a substantially plate shape and may face the open side of the housing body 11. The cover 12 may be fixed to the housing body 11 by various types of coupling methods such as bolting, welding, and fitting coupling.

The secondary batteries 2 may function as a unit structure, which stores and supplies power, in the battery pack.

A plurality of secondary batteries 2 may be provided. The plurality of secondary batteries 2 may be disposed in the housing 1 to form various patterns, such as a grid shape and a zigzag shape. The plurality of secondary batteries 2 may be disposed side by side. The number of the secondary batteries 2 may be varied in design depending on the size and shape of the housing 1 or the like. A detailed configuration of each of the secondary batteries will be described later.

The plurality of secondary batteries 2 may be electrically connected by bus bars (not shown). The plurality of secondary batteries 2 may be connected in series or in parallel by the bus bars. As an example, in the housing 1, the bus bars may connect the secondary batteries 2 disposed in the same row in parallel and connect the secondary batteries 2 disposed in two adjacent rows in series. The bus bar may be formed of an electrically conductive material such as copper, aluminum, nickel, or the like.

Hereinafter, a configuration of one of the secondary batteries 2 according to various embodiments of the present disclosure will be described.

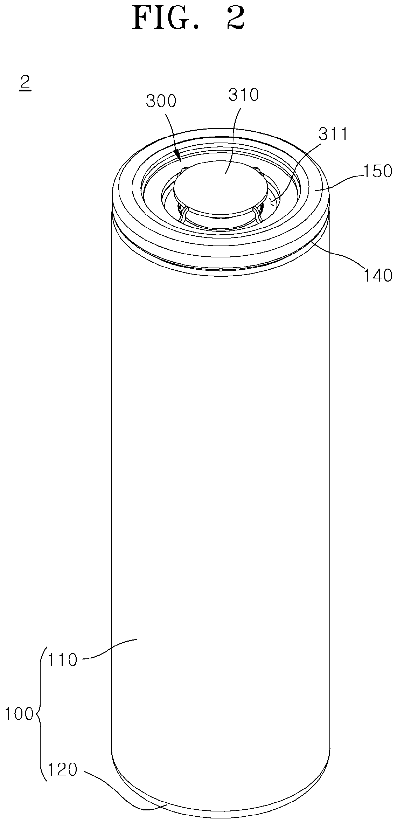

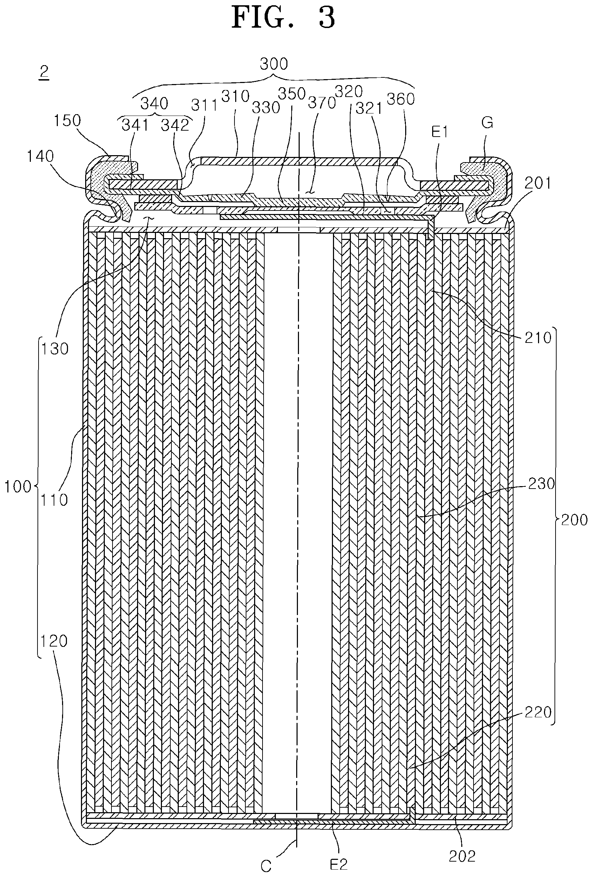

FIG. 2 is a perspective view schematically illustrating a configuration of one of the secondary batteries 2 according to the first embodiment of the present disclosure, and FIG. 3 is a cross-sectional view schematically illustrating a configuration of the secondary battery according to the first embodiment of the present disclosure. Hereinafter, one of the secondary batteries 2 may be referred to as "a" or "the" secondary battery (i.e., it may be singular instead of plural).

Referring to FIGS. 2 and 3, the secondary battery 2 according to the present embodiment may include a case 100, an electrode assembly 200, and a cap assembly 300.

Hereinafter, a case 100 in which the secondary battery 2 is a lithium-ion secondary battery having a cylindrical shape will be described as an example. However, the present disclosure is not limited thereto, and the secondary battery 2 may be a lithium-polymer battery or a prismatic battery.

The case 100 may form an exterior of the secondary battery 2. The case 100 may be provided to be electrically conductive. For example, the case 100 may include at least one material selected from a group including steel, stainless steel, aluminum, and an aluminum alloy. Accordingly, the case 100 can protect the electrode assembly 200 from external impact and perform a heat dissipation function to release heat generated during charging and discharging operations of the electrode assembly 200 to the outside.

The case 100 according to the present embodiment may include a side wall part 110 in the shape of a cylinder with a central axis C formed in a central portion. The central axis C of the case 100 described below may refer to a central axis of the side wall part 110. Both end portions of the side wall part 110 perpendicular to the central axis C of the case 100 may be formed to be open.

The case 100 may further include a bottom part 120 that closes a lower end portion of the side wall part 110. The bottom part 120 may be formed to have a substantially disk shape, and may be disposed to face the lower end portion of the side wall part 110. The bottom part 120 may be disposed perpendicular to the central axis C of the case 100. A peripheral surface of the bottom part 120 may be coupled to the lower end portion of the side wall part 110. The bottom part 120 may be integrally formed with the side wall part 110 by a drawing process or the like, or alternatively, the bottom part 120 may be manufactured separately from the side wall part 110 and then coupled to the side wall part 110 by welding or the like.

The case 100 may further include an opening 130 that opens an upper end portion of the side wall part 110. The opening 130 may function as a configuration that provides a path, through which the electrode assembly 200 to be described below is inserted into the interior of the case 100, on an upper end region of the case 100, and provides a space in which the cap assembly 300 to be described below can be installed. The opening 130 according to the present embodiment may refer to an empty space surrounded by the upper end region of the side wall part 110, which is located at a side opposite to the bottom part 120.

The electrode assembly 200 may function as a unit structure for performing charging and discharging operations of power in the secondary battery 2. The electrode assembly 200 may include a first electrode plate 210, a second electrode plate 220, and a separator 230 disposed between the first electrode plate 210 and the second electrode plate 220.

The electrode assembly 200 may be disposed inside the case 100. The electrode assembly 200 may be inserted into the case 100 through the opening 130 of the case 100.

The electrode assembly 200 may have a shape that is wound around a winding axis.

More specifically, the electrode assembly 200 may have a shape in which the first electrode plate 210, the separator 230, and the second electrode plate 220 are stacked and wound in a clockwise or counterclockwise direction around the winding axis. Accordingly, the electrode assembly 200 may have a shape roughly similar to a jelly roll. A cross-sectional shape of the electrode assembly 200 may be varied in design into various shapes such as an elliptical shape, a polygonal shape, or the like in addition to a circular shape. Here, the winding axis may refer to a straight line passing through a central portion of the electrode assembly 200. The winding axis of the electrode assembly 200 may be disposed coaxially with the central axis C of the case 100.

The first electrode plate 210 may function as a positive electrode of the electrode assembly 200. The first electrode plate 210 may be in the form of a foil including a metal material such as aluminum or an aluminum alloy. The type, size, shape, and the like of the first electrode plate 210 are not particularly limited as long as the first electrode plate 210 has conductivity and does not cause chemical changes in the secondary battery.

A first active material layer may be applied to at least a portion of the first electrode plate 210. The first active material layer may be applied to both surfaces of the first electrode plate 210, or alternatively, the first active material layer may be applied to only one surface of the first electrode plate 210.

As the first electrode plate 210 functions as a positive electrode, the first active material layer may include a positive electrode active material.

The positive electrode active material may include a compound (lithiated intercalation compound) capable of reversible intercalation and deintercalation of lithium. More specifically, the positive electrode active material may include one or more types of composite oxides of lithium and a metal selected from cobalt, manganese, nickel, iron, and a combination thereof.

For example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM). Here, conditions of 0<x<1, 0<y<1, 0<z<1, and x+y+z=1 may be satisfied. The positive electrode active material may include only one of LiFePO₄(LFP), LiMnFePO₄(LMFP), and LiNiₓCo_{y}Mn_{z}O₂(LNCM) or may include two or all of LiFePO₄, LiMnFePO₄, and LiNiₓCo_{y}Mn_{z}O₂.

The first active material layer may further include a positive electrode conductive material.

The positive electrode conductive material is used to impart conductivity to the first active material layer, and any electrically conductive material that does not cause a chemical change in the battery may be used. Examples of the positive electrode conductive material may include a carbon-based material such as natural graphite, artificial graphite, carbon black, acetylene black, ketjen black, carbon fibers, carbon nanofibers, carbon nanotubes, and the like; a metal-based material in the form of metal powder or metal fibers including copper, nickel, aluminum, silver, and the like; a conductive polymer such as a polyphenylene derivative; or a mixture thereof.

The first active material layer may further include a positive electrode binder.

The positive electrode binder serves to adhere particles constituting the positive electrode active material to each other well, and to adhere the positive electrode active material to the first electrode plate 210 well.

Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The first electrode plate 210 may be electrically connected to the cap assembly 300, which will be described below. As the first electrode plate 210 functions as the positive electrode of the electrode assembly 200, the cap assembly 300 may function as a positive terminal of the secondary battery 2. As an example, the first electrode plate 210 may be electrically connected to the cap assembly 300 by a first electrode tab E1. The first electrode tab E1 according to the present embodiment may include a conductive metal material such as copper, a copper alloy, nickel, a nickel alloy, aluminum or an aluminum alloy. The first electrode tab E1 may be disposed on an upper side of the electrode assembly 200, and may have both end portions connected to the first electrode plate 210 and the cap assembly 300, respectively. One end portion of the first electrode tab E1 may be directly connected to the first electrode plate 210, or may be indirectly connected to the first electrode plate 210 through a separate current collector plate (not shown) connected to the first electrode plate 210.

However, the first electrode plate 210 is not limited to the above, and may also be directly connected to the cap assembly 300 without the first electrode tab E1.

The second electrode plate 220 may function as a negative electrode of the electrode assembly 200. The second electrode plate 220 may be in the form of a foil including a metal material such as copper, a copper alloy, nickel, or a nickel alloy. The second electrode plate 220 may be spaced apart from the first electrode plate 210 by a predetermined interval to face the first electrode plate 210.

The type, size, shape, and the like of the second electrode plate 220 are not particularly limited as long as the second electrode plate 220 has conductivity and does not cause chemical changes in the secondary battery.

A second active material layer may be applied to at least a portion of the second electrode plate 220. The second active material layer may be applied to both surfaces of the second electrode plate 220, or alternatively, the second active material layer may be applied to only one surface of the second electrode plate 220.

As the second electrode plate 220 functions as a negative electrode, the second active material layer may include a negative electrode active material.

The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite such as amorphous, plate-shaped, flake-shaped, spherical-shaped or fiber-shaped natural graphite or artificial graphite. Examples of the amorphous carbon may include soft carbon or hard carbon, a mesophase pitch carbide, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (x = 1 or 2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to one embodiment, the silicon-carbon composite may be in the form of silicon particles and amorphous carbon coated on a surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be mixed with a carbon-based negative electrode active material.

The second active material layer may further include a negative electrode conductive material and a negative electrode binder.

The negative electrode conductive material is used to impart conductivity to the second active material layer, and any electrically conductive material that does not cause a chemical change in the battery may be used. Examples of the negative electrode conductive material may include a carbon-based material such as natural graphite, artificial graphite, carbon black, acetylene black, ketjen black, carbon fibers, carbon nanofibers, carbon nanotubes, and the like; a metal-based material in the form of metal powder or metal fibers including copper, nickel, aluminum, silver, and the like; a conductive polymer such as a polyphenylene derivative; or a mixture thereof.

The negative electrode binder serves to adhere particles constituting the negative electrode active material to each other well, and to adhere the negative electrode active material to the second electrode plate 220 well.

Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The second electrode plate 220 may be electrically connected to the case 100. As an example, the second electrode plate 220 may be electrically connected to the case 100 by a second electrode tab E2. As the second electrode plate 220 functions as the negative electrode of the electrode assembly 200, the case 100 may function as a negative electrode terminal of the secondary battery 2. The second electrode tab E2 according to the present embodiment may include a conductive metal material such as copper, a copper alloy, nickel, or a nickel alloy. The second electrode tab E2 is disposed at a lower side of the electrode assembly 200, and may have both end portions connected to the second electrode plate 220 and the bottom part 120 of the case 100, respectively. One end portion of the second electrode tab E2 may be directly connected to the second electrode plate 220, or may be indirectly connected to the second electrode plate 220 through a separate current collector plate (not shown) connected to the second electrode plate 220.

However, the second electrode plate 220 is not limited to the above, and may also be directly connected to the case 100 without the second electrode tab E2.

The separator 230 may be disposed between the first electrode plate 210 and the second electrode plate 220. The separator 230 may prevent a short circuit between the first electrode plate 210 and the second electrode plate 220 while allowing the movement of lithium ions between the first electrode plate 210 and the second electrode plate 220.

The separator 230 may be made of polyethylene, polypropylene, polyvinylidene fluoride, or a multilayer film of two or more layers thereof, and may be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate, and a coating layer including an organic material, an inorganic material, or a combination thereof located on one surface or opposite surfaces of the porous substrate.

The porous substrate may be a polymer film formed of a polymer, or a copolymer or mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, polytetrafluoroethylene (PTFE), and polytetrafluoroethylene.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic and inorganic materials may be present by being mixed in one coating layer or may be present in the form in which a coating layer including organic materials and a coating layer including inorganic materials are stacked.

A pair of separators 230 may be provided. The pair of separators 230 may be disposed to face both surfaces of the first electrode plate 210 or the second electrode plate 220, respectively. The pair of separators 230 may be wound around the winding axis together with the first electrode plate 210 and the second electrode plate 220.

A first insulating plate 201 and a second insulating plate 202 may be disposed on opposite sides of the electrode assembly 200, respectively (e.g., at the top and bottom of the electrode assembly 200 in the orientation shown in FIG. 3). The first insulating plate 201 and the second insulating plate 202 may each include insulating materials such as rubber, polyethylene (PE), polypropylene (PP), polyethylene terephthalate (PET), and the like.

The first insulating plate 201 according to the present embodiment may have, e.g. may be formed to have, a substantially disk shape. The first insulating plate 201 may be disposed between the cap assembly 300 and an upper surface of the electrode assembly 200. Accordingly, the first insulating plate 201 may block the upper surface of the electrode assembly 200 from directly contacting the cap assembly 300 and insulate the electrode assembly 200 and the cap assembly 300 from each other. A through hole (not shown) through which the first electrode tab E1 may pass may be formed in the first insulating plate 201.

The second insulating plate 202 according to the present embodiment may have, e.g. may be formed to have, a substantially disk shape. The second insulating plate 202 may be disposed between a lower surface of the electrode assembly 200 and the bottom part 120 of the case 100. Accordingly, the second insulating plate 202 may block the lower surface of the electrode assembly 200 from directly contacting the bottom part 120 of the case 100 and insulate the electrode assembly 200 and the bottom part 120 of the case 100 from each other. A through hole (not shown) through which the second electrode tab E2 may pass may be formed in the second insulating plate 202.

The cap assembly 300 may be coupled to the case 100, and may seal the opening 130 of the case 100.

As an example, the cap assembly 300 may be disposed at the upper end portion of the side wall part 110, that is, at the opening 130. A beading part 140, which is formed to be concave toward the central axis C of the case 100, may be formed on the side wall part 110. The beading part 140 may be on, e.g. may be disposed on, a lower side of the cap assembly 300, and may restrict the cap assembly 300 from being inserted more than a set distance into the interior of the case 100. A crimping part 150, which is formed by bending the upper end portion of the side wall part 110 toward the central axis C of the case 100, may be formed on an upper side of the beading part 140. The crimping part 150 may be on, e.g. may be disposed on, an upper side of the cap assembly 300, and may prevent the cap assembly 300 from being separated from the case 100.

A gasket G may be disposed between the case 100 and the cap assembly 300. The gasket G may function as a component that fixes a position of the cap assembly 300 in the opening 130 by its own elastic restoring force, electrically insulates the case 100 and the cap assembly 300 from each other, and prevents moisture or electrolyte from entering or exiting between the case 100 and the cap assembly 300.

The gasket G according to the present embodiment may include insulating materials such as rubber, polyethylene (PE), polypropylene (PP), polyethylene terephthalate (PET), and the like. The gasket G may have, e.g. may be formed to have, a substantially ring shape and may be inside, e.g. disposed inside, the beading part 140 and/or the crimping part 150. An outer side surface of the gasket G may be in close contact with an inner side surface of the beading part 140 and/or the crimping part 150, and an inner side surface of the gasket G may be in close contact with an outer side surface of the cap assembly 300.

The gasket G may be disposed inside the beading part 140 and/or the crimping part 150.

The cap assembly 300 may be electrically connected to the first electrode plate 210 by the first electrode tab E1. As the first electrode plate 210 functions as the positive electrode of the electrode assembly 200, the cap assembly 300 may function as a positive terminal of the secondary battery.

If an internal pressure of the case 100 increases due to an overcurrent or the like, the cap assembly 300 may cut off the electrical connection between the secondary battery 2 and an external device. The cap assembly 300 may rupture if the internal pressure of the case 100 increases to greater than or equal to a set level and allow the internal space and external space of the case 100 to be in communication. Accordingly, the cap assembly 300 may reduce the risk of explosion of the secondary battery 2 when an overcurrent occurs.

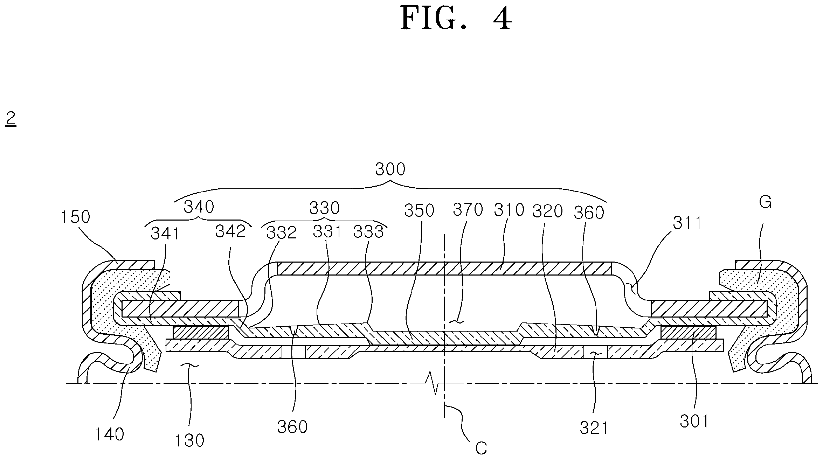

FIG. 4 is an enlarged view schematically illustrating a configuration of the cap assembly 300 according to the first embodiment of the present disclosure.

Referring to FIGS. 1 to 4, the cap assembly 300 according to the present embodiment may include a cap-up 310, a cap-down 320, a vent plate 330, an extension part 340, and a contact part 350.

The cap-up 310 forms the exterior of an upper-side of the cap assembly 300, and may be disposed in the opening 130. The cap-up 310 may be electrically connected to the first electrode plate 210 by the cap-down 320 and the vent plate 330, which will be described below.

The cap-up 310 according to the present embodiment may have a disk shape with a central portion that protrudes convexly upward. A central axis of the cap-up 310 may be coaxially aligned with the central axis C of the case 100. The central portion of the cap-up 310 may protrude to the outside of the case 100. An edge portion of the cap-up 310 may be disposed inside the case 100. A peripheral surface of the edge portion of the cap-up 310 may be spaced apart from the inner side surface of the gasket G by a predetermined distance. The cap-up 310 may be made of electrically conductive materials such as nickel, aluminum, copper, and the like.

A cap-up hole 311 may be formed in the cap-up 310 to discharge gases generated inside the case 100 to the outside of the case 100. The cap-up hole 311 according to the present embodiment may have the shape of a hole passing through the peripheral surface of the central portion of the cap-up 310. A plurality of cap-up holes 311 may be provided. The plurality of cap-up holes 311 may be arranged at predetermined intervals along the peripheral surface of the central portion of the cap-up 310.

The cap-down 320 is disposed to face the cap-up 310, and may be electrically connected to the electrode assembly 200.

The cap-down 320 according to the present embodiment is formed to have a substantially disk shape, and may be disposed inside the case 100. The cap-down 320 may be disposed below the cap-up 310. That is, the cap-down 320 may be disposed between the cap-up 310 and the electrode assembly 200. A central axis of the cap-down 320 may be disposed coaxially with the central axis C of the case 100. An upper surface of the cap-down 320 may be spaced apart from a lower surface of the cap-up 310.

The area of the cap-down 320 may be less than the area of a cross-section of the electrode assembly 200 perpendicular to the central axis C of the case 100. However, the area of the cap-down 320 is not limited thereto, and may be the same as the cross-sectional area of the electrode assembly 200 or may be greater than the cross-sectional area of the electrode assembly 200.

The cap-down 320 may be made of electrically conductive materials such as nickel, aluminum, copper, and the like. The cap-down 320 may be electrically connected to the electrode assembly 200. As an example, an end portion of the first electrode tab E1 extending from the first electrode plate 210 may be connected to a lower side surface of the cap-down 320 by various types of coupling methods such as welding. The cap-down 320 may be electrically connected to the cap-up 310 by the vent plate 330, which is described below.

A cap-down hole 321, which vertically passes through the cap-down 320, may be formed in the cap-down 320. The cap-down hole 321 may function as a component that provides a path through which gases generated inside the case 100 pass through the cap-down 320 when an overcurrent occurs. A plurality of cap-down holes 321 may be provided. The plurality of cap-down holes 321 may be arranged along a circumference centered on the central axis of the cap-down 320.

The vent plate 330 may be disposed between the cap-up 310 and the cap-down 320. The vent plate 330 may provide an electrical conduction path between the cap-up 310 and the cap-down 320 during normal operation of the secondary battery 2. When an overcurrent occurs, the vent plate 330 may be deformed by a pressure of the gas generated inside the case 100, and may cut off the electrical connection between the cap-up 310 and the cap-down 320. The vent plate 330 may rupture when the internal pressure of the case 100 increases to greater than or equal to a set level, thereby opening a path for gases between the cap-up hole 311 and the cap-down hole 321 to be discharged.

The vent plate 330 according to the present embodiment may be formed to have a substantially disk shape. The vent plate 330 may be disposed such that both upper and lower surfaces thereof face the cap-up 310 and the cap-down 320, respectively. The lower surface of the vent plate 330 may be disposed to face the cap-down hole 321. A central axis of the vent plate 330 may be disposed coaxially with the central axis C of the case 100. The vent plate 330 may be made of electrically conductive materials such as nickel, aluminum, copper, and the like.

An insulator 301 may be disposed between the vent plate 330 and the cap-down 320. The insulator 301 may function as a component that prevents direct contact between the vent plate 330 and the cap-down 320 and directs the electrical connection between the vent plate 330 and the cap-down 320 to be made only by the contact part 350, which is described below.

The insulator 301 according to the present embodiment may have, e.g. may be formed to have, a hollow ring shape. A central axis of the insulator 301 may be coaxially aligned with the central axis C of the case 100 and the central axis of the vent plate 330. An upper surface of the insulator 301 may be in contact with the lower surface of the vent plate 330, and a lower surface of the insulator 301 may be in contact with the upper surface of the cap-down 320. The insulator 301 may be formed of insulating materials such as rubber, polyethylene (PE), polypropylene (PP), polyethylene terephthalate (PET), and the like.

The extension part 340 extends from the vent plate 330, and may be connected to the cap-up 310. The extension part 340 may function as a component that supports the vent plate 330 with respect to the cap-up 310 and provides an electrical connection between the cap-up 310 and the vent plate 330. The extension part 340 may be formed of the same material as the vent plate 330.

The extension part 340 according to the present embodiment may include a support part 341 and a hinge part 342.

The support part 341 forms the exterior of one side of the extension part 340, and may be connected to the cap-up 310.

The support part 341 according to the present embodiment may be disposed to surround an end portion of the cap-up 310, that is, an edge region of the cap-up 310 facing the gasket G. As an example, the support part 341 may have a substantially U-shaped cross-sectional shape. One end portion of the support part 341 may be in contact with an upper surface of the cap-up 310, and the other end portion of the support part 341 may be bent downward to be in contact with the lower surface of the cap-up 310. The support part 341 may be coupled to the cap-up 310 by various types of coupling methods such as laser welding, ultrasonic welding, and resistance welding.

The hinge part 342 forms the exterior of the other side of the extension part 340, and may be disposed between the support part 341 and the vent plate 330. The hinge part 342 may function as a component that connects the support part 341 and the vent plate 330 to each other and guides the deformation of the vent plate 330 when the internal pressure of the case 100 increases (e.g., reaches or exceeds a predetermined internal pressure).

The hinge part 342 according to the present embodiment has a substantially circular ring shape, and may be disposed between the support part 341 and the vent plate 330. An inner peripheral surface of the hinge part 342 may be connected to the vent plate 330, and an outer peripheral surface of the hinge part 342 may be connected to the other end portion of the support part 341. The hinge part 342 may extend downward in a stepped manner from the outer peripheral surface toward the inner peripheral surface. As an example, a central portion of the hinge part 342 may have a cross section bent in an L-shape. A bending angle of the central portion of the hinge part 342 may be changed in design to various angles other than the angle shown in FIG. 4.

When an overcurrent occurs, the vent plate 330 may be deformed based on the hinge part 342. As an example, when the internal pressure of the case 100 increases due to an overcurrent, the gases passing through the cap-down hole 321 press the vent plate 330 upward, and the vent plate 330 may be deformed into a form in which the central portion thereof protrudes upward convexly due to a change in the bending angle of the hinge part 342.

The contact part 350 may protrude from the vent plate 330 toward the cap-down 320 to be in contact with the cap-down 320. The contact part 350 may function as a component that electrically connects the vent plate 330 and the cap-down 320. Accordingly, a current generated from the first electrode plate 210 may be transmitted to the cap-up 310 sequentially through the first electrode tab E1, the cap-down 320, the contact part 350, the vent plate 330, and the extension part 340.

The contact part 350 according to the present embodiment may protrude downward from the lower surface of the vent plate 330. A lower surface of the contact part 350 may be in contact with the upper surface of the cap-down 320. A central axis of the contact part 350 may be coaxially aligned with the central axis C of the case 100 and the central axis of the vent plate 330. A diameter of the contact part 350 may be changed in design within a range less than an inner diameter of the insulator 301.

If the vent plate 330 is deformed due to an increase in the internal pressure of the case 100, the contact part 350 may be separated from the cap-down 320. Accordingly, when an overcurrent occurs, the electrical connection between the cap-down 320 and the vent plate 330 may be cut off.

A thickness of a portion of the vent plate 330 according to the present embodiment may increase toward the central axis C of the case 100. Here, the thickness of the vent plate 330 may refer to a vertical length of the vent plate 330 parallel to the central axis C of the case 100 in the orientation shown in FIGS. 3 and 4.

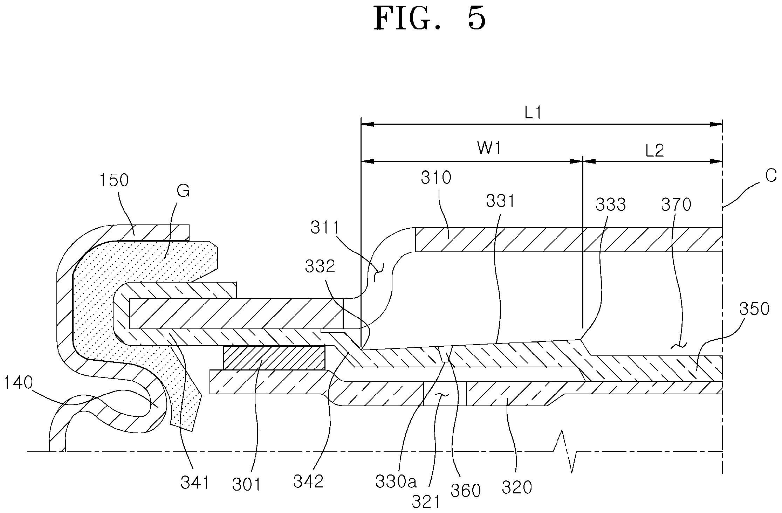

FIG. 5 is an enlarged view schematically illustrating a configuration of the vent plate according to the first embodiment of the present disclosure.

Referring to FIG. 5, the vent plate 330 according to the present embodiment may include an upper inclined surface 331.

The upper inclined surface 331 may refer to a partial region of an upper surface of the vent plate 330 disposed to face the cap-up 310. The upper inclined surface 331 may be disposed to be inclined with respect to a radial direction of the case 100.

The upper inclined surface 331 according to the present embodiment may include a first upper edge 332 and a second upper edge 333.

The first upper edge 332 and the second upper edge 333 may be spaced apart from each other in the radial direction of the case 100.

As an example, as shown in FIG. 5, the first upper edge 332 according to the present embodiment may refer to an outer peripheral end portion of the upper inclined surface 331 disposed toward the hinge part 342. The first upper edge 332 may be connected to the hinge part 342. More specifically, the first upper edge 332 may be disposed on a boundary region between an outer peripheral surface of the vent plate 330 and the inner peripheral surface of the hinge part 342.

The second upper edge 333 according to the present embodiment may refer to an inner peripheral end portion of the upper inclined surface 331 disposed between the first upper edge 332 and the central axis C of the case 100. The second upper edge 333 may be disposed at a position spaced apart from the central axis C of the case 100 by a predetermined distance in the radial direction of the case 100.

The first upper edge 332 and the second upper edge 333 may be disposed at different heights. As an example, a distance between the cap-up 310 and the second upper edge 333 may be less than a distance between the cap-up 310 and the first upper edge 332. More specifically, a distance between the upper inclined surface 331 and the cap-up 310 may decrease from the first upper edge 332 toward the second upper edge 333. Accordingly, the vent plate 330 may have a cross-sectional shape with an upper side thickness that gradually increases toward the central axis C of the case 100.

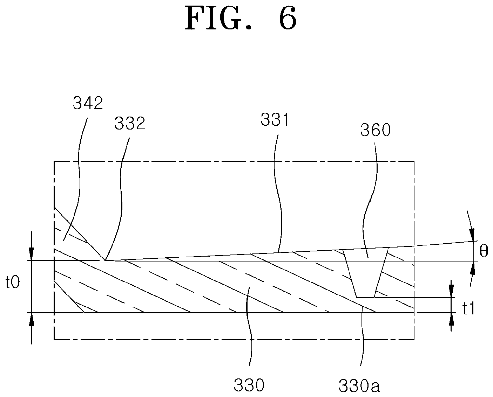

FIG. 6 is an enlarged view schematically illustrating an angle of the upper inclined surface according to the first embodiment of the present disclosure.

Referring to FIG. 6, an angle θ of the upper inclined surface 331 with respect to the radial direction of the case 100 may range from 1° to 2°. When the angle θ of the upper inclined surface 331 is less than 1°, there may be a problem in that deformation of the vent plate 330 due to stress generated during assembly of the vent plate 330 may not be sufficiently suppressed. When the angle θ of the upper inclined surface 331 is greater than 2°, there may be a problem in that processing of the upper inclined surface 331 is difficult due to the thickness limitation of the raw material of the vent plate 330.

A ratio of a width W1 (see FIG. 5) of the upper inclined surface 331 to a distance from the central axis of the case 100 to the hinge part 342 may be greater than or equal to 0.5. Here, the width W1 of the upper inclined surface 331 may refer to a difference between a distance L1 from the central axis C of the case 100 to the first upper edge 332 and a distance L2 from the central axis C of the case 100 to the second upper edge 333. That is, the width W1 of the upper inclined surface 331 may be greater in size than 50% of a radius of the vent plate 330. As the second upper edge 333 is spaced apart from the central axis C of the case 100, a ratio of the width W1 of the upper inclined surface 331 to the distance from the central axis of the case 100 to the hinge part 342 may be less than 1.

In the present embodiment, as the first upper edge 332 is connected to the hinge part 342, the distance from the central axis of the case 100 to the hinge part 342 may be equal to the distance L1 from the central axis C of the case 100 to the first upper edge 332. As an example, if the distance from the central axis of the case 100 to the hinge part 342 is 6 mm, the width W1 of the upper inclined surface 331 may be greater than or equal to 3 mm and less than 6 mm.

The secondary battery 2 according to the present embodiment may further include a notch 360.

The notch 360 may be formed to be concave from an outer side surface of the vent plate 330. The notch 360 may function as a component that guides the rupture of the vent plate 330 when the internal pressure of the case 100 increases to greater than or equal to a set level.

The notch 360 according to the present embodiment may have the shape of a groove that is concavely recessed downward from the upper inclined surface 331 toward the inside of the vent plate 330. The notch 360 may be formed such that a cross-sectional area thereof gradually narrows as it extends downward. The notch 360 may be formed to have a ring shape along a circular arc centered on the central axis C of the case 100.

The vent plate 330 according to the present embodiment may include a first rupture part 330a. The first rupture part 330a may refer to a partial region of the vent plate 330, which faces the notch 360 vertically in the orientation shown, among the entire region of the vent plate 330. A thickness t1 of the first rupture part 330a may be less than a thickness of the remaining region of the vent plate 330. As an example, when a thickness t0 of the vent plate 330 at the first upper edge 332 is 3 mm, the thickness t1 of the first rupture part 330a may be 0.08 mm. Accordingly, when the pressure applied to the vent plate 330 increases to greater than or equal to the set level, the vent plate 330 may rupture first in a region in which the first rupture part 330a is formed, and the gases passing through the cap-down hole 321 may be transmitted to the cap-up hole 311 through the ruptured portion of the first rupture part 330a.

The secondary battery 2 according to the present embodiment may further include a recess 370 (see FIG. 5).

The recess 370 may be, e.g. may be formed to be, concave from the vent plate 330 toward the contact part 350. The recess 370 may function as a component that reduces the thickness of the central region of the vent plate 330, which is relatively increased in thickness due to the contact part 350, thereby inducing smooth deformation of the vent plate 330 when the internal pressure of the case 100 increases.

The recess 370 in the present embodiment may have the shape of a groove that is formed as a concave recess, extending downward from an upper surface of the vent plate 330 facing the cap-up 310 toward the contact part 350. A central axis of the recess 370 may be coaxially aligned with the central axis C of the case 100 and the central axis of the contact part 350. A diameter of the recess 370 parallel to the radial direction of the case 100 may be variously changed in design within a range less than the distance L2 from the central axis C of the case 100 to the second upper edge 333.

Hereinafter, experimental results of measuring the degree of deformation of the vent plate during the assembly process of the secondary battery according to the present embodiment will be described.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

### [Example 1]

A secondary battery 2 was manufactured with a vent plate 330 having a radius of 6 mm, an upper inclined surface 331 with a width W1 of 3.8 mm, a first upper edge 332 with a thickness t0 of 0.3 mm, and a second upper edge 333 (see FIG. 5) with a thickness of 0.426 mm.

### [Comparative Example]

A secondary battery 2 was manufactured with a vent plate 330 that is different from that in Example 1 only in that the upper inclined surface 331 is not formed and the vent plate 330 has a constant thickness of 0.3 mm in a radial direction of a case 100.

### [Experimental Example]

The amount of deflection of the vent plate 330 was measured during the manufacturing process of the secondary battery 2 according to Example 1 and Comparative Example. The amount of deflection of the vent plate 330 was measured using the difference in height of the lower surface of the contact part 350 before and after assembly.

**[Table 1]**

| | Comparative Example | Example 1 |
|---|---|---|
| Amount of deflection | 0.151 mm | 0.079 mm |

Referring to Table 1, during the manufacturing process of the secondary battery 2, the amount of deflection of the vent plate 330 of Example 1, in which the upper inclined surface 331 is formed, was measured to be 0.079 mm, whereas the amount of deflection of the vent plate 330 of Comparative Example was measured to be 0.151 mm

Accordingly, it was confirmed that the secondary battery 2 of Example 1, in which the upper inclined surface 331 is formed, can prevent the deformation of the vent plate 330 due to stress generated during assembly by more than 50% compared to the secondary battery 2 of Comparative Example, in which the upper inclined surface 331 is not formed.

Hereinafter, a secondary battery 2 according to a second embodiment of the present disclosure will be described.

The secondary battery 2 according to the second embodiment may be configured to be different from the first embodiment only in a detailed configuration of a vent plate 330 from the secondary battery 2 according to the first embodiment of the present disclosure. Accordingly, in describing the secondary battery 2 according to the present embodiment, only the detailed configuration of the vent plate 330, which is different from that in the secondary battery 2 according to the first embodiment of the present disclosure, will be described. For the remaining components of the secondary battery 2 according to the present embodiment, the description of the secondary battery 2 according to the first embodiment of the present disclosure may be applied without modification.

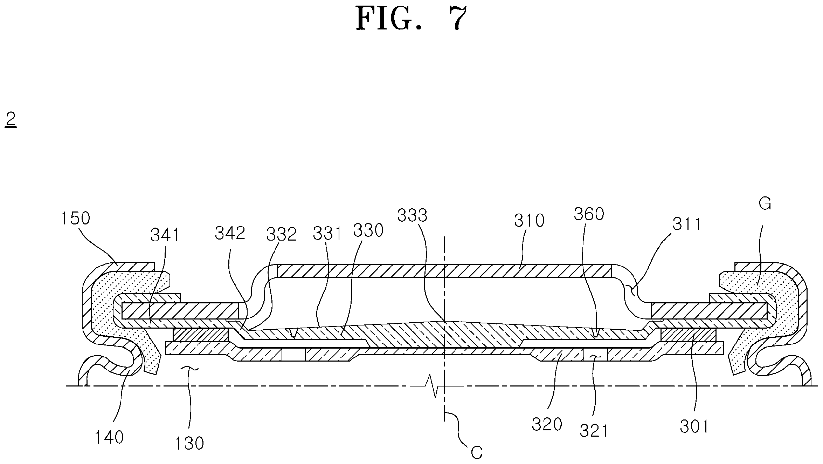

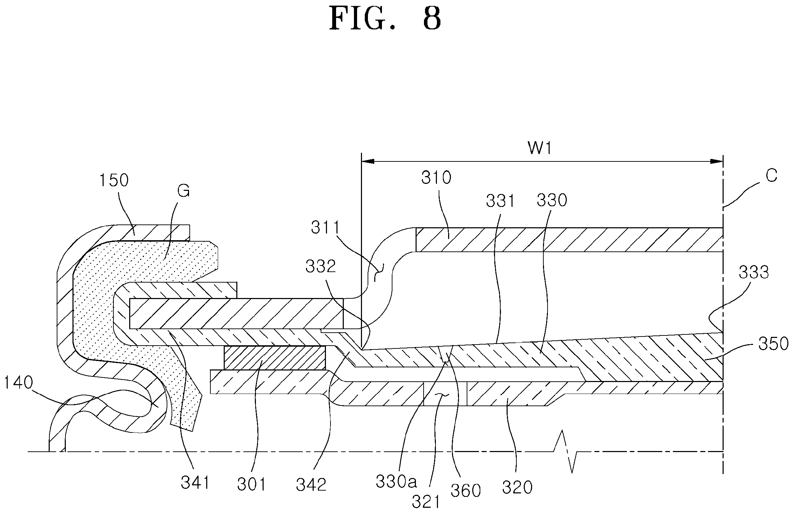

FIG. 7 is a cross-sectional view schematically illustrating a configuration of a cap assembly according to the second embodiment of the present disclosure, and FIG. 8 is an enlarged view schematically illustrating a configuration of the vent plate according to the second embodiment of the present disclosure.

Referring to FIGS. 7 and 8, a second upper edge 333 according to the present embodiment may be disposed in contact with the central axis C of the case 100. That is, a distance (c.f. the distance L2 in FIG. 5) from the central axis C of the case 100 to the second upper edge 333 may be 0. Accordingly, the second upper edge 333 may refer to a vertex portion formed at an upper end of a central portion of the vent plate 330, as shown in FIG. 7.

When the first upper edge 332 is connected to the hinge part 342, a ratio of a width W1 of an upper inclined surface 331 to a distance from the central axis of the case 100 to the hinge part 342 may be 1. In this case, the upper inclined surface 331 may be the entire region of an upper surface of the vent plate 330 facing the cap-up 310. Accordingly, the secondary battery 2 according to the present embodiment can more effectively prevent deformation of the vent plate 330 due to stress generated during assembly.

Since the second upper edge 333 is disposed in contact with the central axis C of the case 100, the secondary battery 2 according to the present embodiment can be configured in a form in which the recess 370 is omitted.

Hereinafter, a secondary battery 2 according to a third embodiment of the present disclosure will be described.

The secondary battery 2 according to the present embodiment may be configured to be different from the secondary battery 2 according to the first embodiment of the present disclosure only in a detailed configuration of a vent plate 330. Accordingly, in describing the secondary battery 2 according to the present embodiment, only the detailed configuration of the vent plate 330, which is different from that in the secondary battery 2 according to the first embodiment of the present disclosure, will be described. For the remaining components of the secondary battery 2 according to the present embodiment, the description of the secondary battery 2 according to the first embodiment of the present disclosure may be applied without modification.

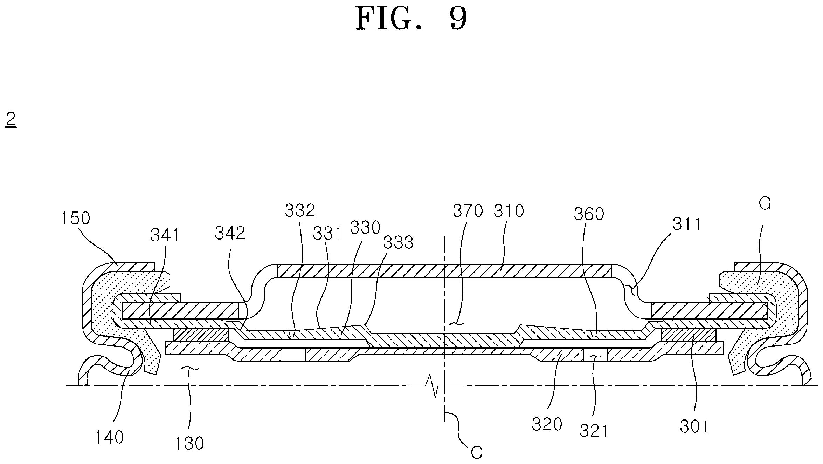

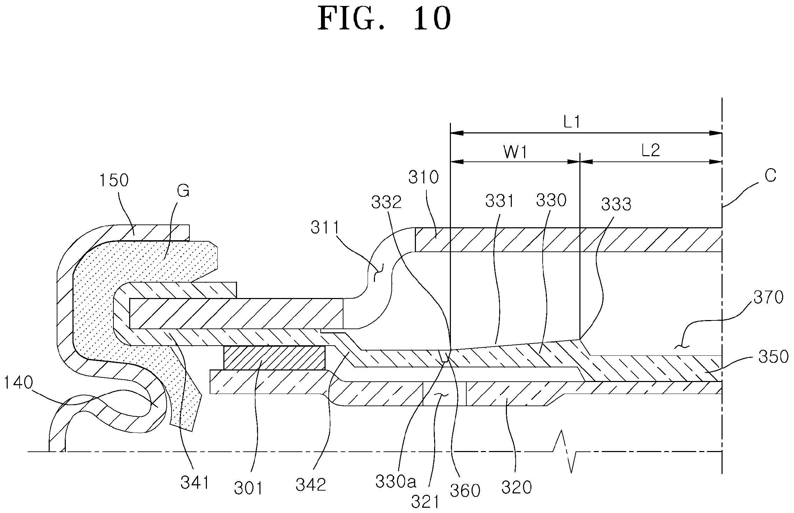

FIG. 9 is a cross-sectional view schematically illustrating a configuration of a cap assembly according to the third embodiment of the present disclosure, and FIG. 10 is an enlarged view schematically illustrating a configuration of the vent plate 330 according to the third embodiment of the present disclosure.

Referring to FIGS. 9 and 10, a distance L1 from the central axis C of the case 100 to a first upper edge 332, according to the present embodiment, may be equal to or less than a distance from the central axis C of the case 100 to the notch 360. Here, the distance from the central axis C of the case 100 to the notch 360 may refer to a distance between an inner peripheral end portion of the notch 360 facing the central axis C of the case 100 and the central axis C of the case 100.

Hereinafter, a case 100 in which the first upper edge 332 is connected to the inner peripheral end portion of the notch 360 will be described as an example. Accordingly, the distance from the central axis C of the case 100 to the notch 360 may be equal to the distance L1 from the central axis C of the case 100 to the first upper edge 332.

A ratio of a width W1 of an upper inclined surface 331 to the distance from the central axis C of the case 100 to the notch 360 may range from 0.5 to 1. The ratio of the width W1 of the upper inclined surface 331 to the distance from the central axis C of the case 100 to the notch 360 being 1 may indicate that a second upper edge 333 is in contact with the central axis of the case 100. As an example, the width W1 of the upper inclined surface 331 according to the present embodiment may be greater than or equal to 2 and less than or equal to 5 mm.

In the present embodiment, the notch 360 may be formed to be concave downward from an upper surface of the vent plate 330 parallel to the radial direction of the case 100 without the upper inclined surface 331 being formed thereon. Accordingly, the secondary battery 2 according to the present embodiment has the advantage of relatively easy processing of the notch 360 as compared to when the notch 360 is directly formed on the upper inclined surface 331.

Hereinafter, a secondary battery 2 according to a fourth embodiment of the present disclosure will be described.

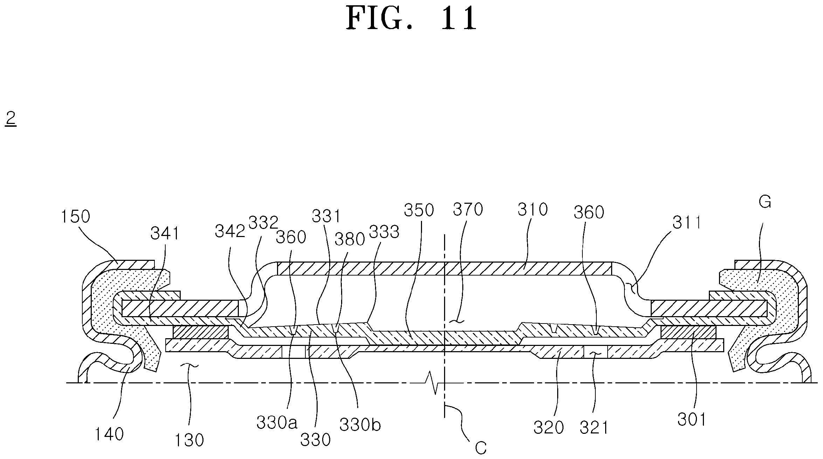

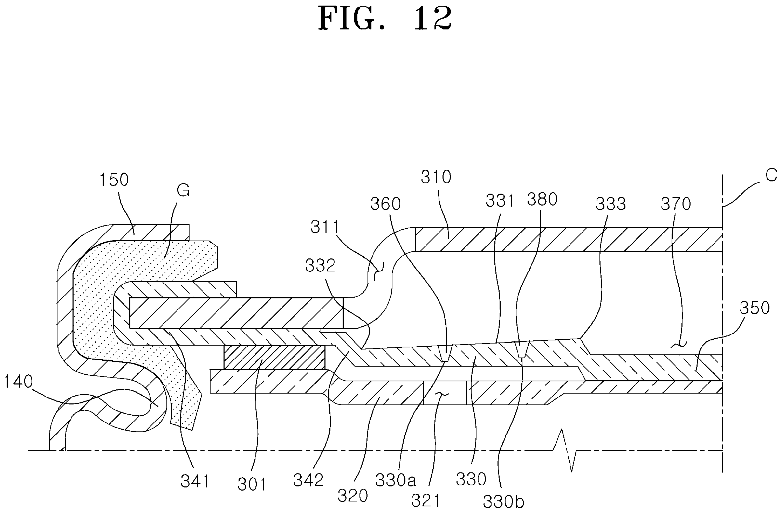

FIG. 11 is a cross-sectional view schematically illustrating a configuration of a cap assembly 300 according to the fourth embodiment of the present disclosure, and FIG. 12 is an enlarged view schematically illustrating a configuration of the vent plate 330 according to the fourth embodiment of the present disclosure.

Referring to FIGS. 11 and 12, the secondary battery 2 according to the present embodiment may further include a guide notch 380.

The secondary battery 2 according to the present embodiment may be configured to be different from the secondary batteries 2 according to the first to third embodiments of the present disclosure only by further including a guide notch 380. Accordingly, in describing the secondary battery 2 according to the fourth embodiment, only the guide notch 380, which is not described with respect to the secondary batteries 2 according to the first to third embodiments of the present disclosure, will be described. For the remaining components of the secondary battery 2 according to the present embodiment, the description of the secondary batteries 2 according to the first to third embodiments of the present disclosure may be applied without modification.

In FIGS. 11 and 12, a case 100 in which the guide notch 380 is applied to the secondary battery 2 according to the first embodiment of the present disclosure is described as an example, but the present disclosure is not limited thereto, and the guide notch 380 may also be applied to the secondary batteries 2 according to the second or third embodiment of the present disclosure.

The guide notch 380 is formed to be concave from the upper inclined surface 331, and may be spaced apart from the notch 360. The guide notch 380 may function as a component that, in conduction with the notch 360, guides the deformation and rupture of the vent plate 330, whose thickness is increased by the upper inclined surface 331, when the internal pressure of the case 100 increases to greater than or equal to the set level. Accordingly, the guide notch 380 may prevent the phenomenon in which the vent plate 330, whose thickness is relatively increased by the upper inclined surface 331, is not smoothly deformed when an overcurrent occurs.

The guide notch 380 according to the present embodiment may have the shape of a groove that is concavely recessed downward from the upper inclined surface 331 toward the inside of the vent plate 330. The guide notch 380 may be formed such that a cross-sectional area thereof gradually narrows as it extends downward. The guide notch 380 may have, e.g. may be formed to have, a ring shape along the circular arc centered on the central axis C of the case 100. A distance from the central axis C of the case 100 to the guide notch 380 may be less than the distance from the central axis C of the case 100 to the notch 360.

The vent plate 330 according to the present embodiment may further include a second rupture part 330b.

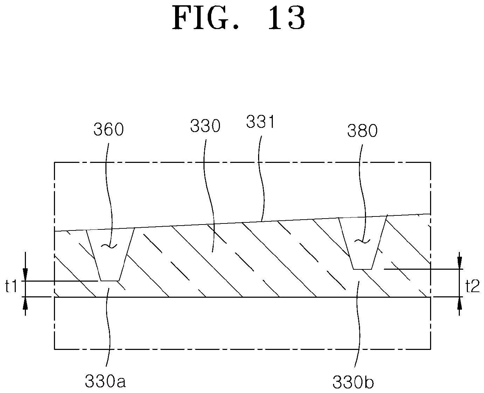

FIG. 13 is an enlarged view schematically illustrating a configuration of the first rupture part 330a and the second rupture part 330b according to the fourth embodiment of the present disclosure.

The second rupture part 330b may refer to a partial region of the vent plate 330, which faces the guide notch 380 vertically, among the entire region of the vent plate 330. A thickness t2 of the second rupture part 330b may be greater than the thickness t1 of the first rupture part 330a. More specifically, a ratio of the thickness t1 of the first rupture part 330a to the thickness t2 of the second rupture part 330b may range from 0.4 to 0.8. As an example, when the thickness t1 of the first rupture part 330a is 0.08 mm, the thickness t2 of the second rupture part 330b may be greater than or equal to 0.1 mm and less than or equal to 0.2 mm. When the thickness t2 of the second rupture part 330b is less than 0.1 mm, deformation resistance performance of the vent plate 330 due to the upper inclined surface 331 may be excessively weakened. When the thickness t2 of the second rupture part 330b is greater than 0.2 mm, the deformation of the vent plate 330 may be delayed when the internal pressure of the case 100 increases.

Hereinafter, a secondary battery 2 according to a fifth embodiment of the present disclosure will be described.

The secondary battery 2 according to the present embodiment may be configured to be different from the secondary battery 2 according to the first embodiment of the present disclosure only in a detailed configuration of the vent plate 330. Accordingly, in describing the secondary battery 2 according to the present embodiment, only the detailed configuration of the vent plate 330, which is different from that in the secondary battery 2 according to the first embodiment of the present disclosure, will be described. For the remaining components of the secondary battery 2 according to the present embodiment, the description of the secondary battery 2 according to the first embodiment of the present disclosure may be applied without modification.

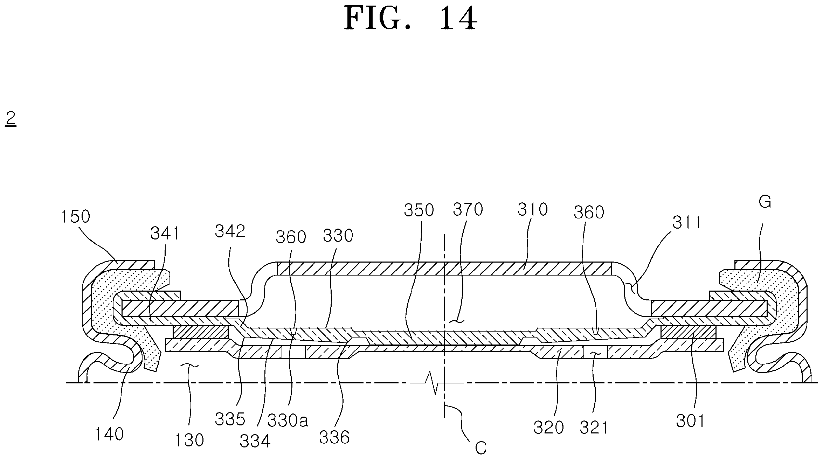

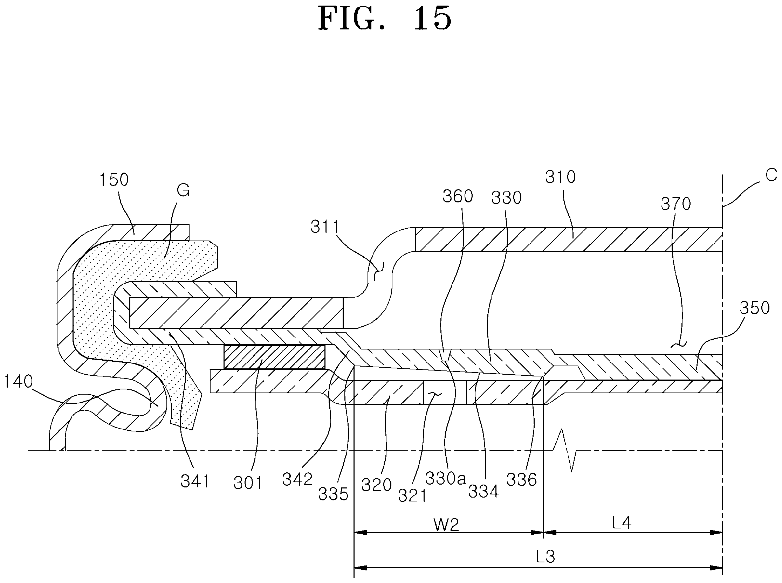

FIG. 14 is a cross-sectional view schematically illustrating a configuration of a cap assembly 300 according to the fifth embodiment of the present disclosure, and FIG. 15 is an enlarged view schematically illustrating a configuration of the vent plate 330 according to the fifth embodiment of the present disclosure.

Referring to FIGS. 14 and 15, the vent plate 330 according to the present embodiment may include a lower inclined surface 334. The vent plate 330 according to the present embodiment may be configured to include only the lower inclined surface 334 without the upper inclined surface 331.

The lower inclined surface 334 may refer to a partial region of the lower surface of the vent plate 330 disposed to face the cap-down 320. The lower inclined surface 334 may be disposed to be inclined with respect to the radial direction of the case 100.

The lower inclined surface 334 according to the present embodiment may include a first lower edge 335 and a second lower edge 336.

The first lower edge 335 and the second lower edge 336 may be spaced apart from each other in the radial direction of the case 100.

As an example, as shown in FIG. 15, the first lower edge 335 according to the present embodiment may refer to an outer peripheral end portion of the lower inclined surface 334 disposed to face the hinge part 342. The first lower edge 335 may be connected to the hinge part 342. More specifically, the first lower edge 335 may be disposed on a boundary region between an outer peripheral surface of the vent plate 330 and the inner peripheral surface of the hinge part 342.

The second lower edge 336 according to the present embodiment may refer to an inner peripheral end portion of the lower inclined surface 334 disposed between the first lower edge 335 and the central axis C of the case 100. The second lower edge 336 may be disposed at a position spaced apart from the central axis C of the case 100 by a predetermined distance in the radial direction of the case 100.

The first lower edge 335 and the second lower edge 336 may be disposed at different heights. As an example, a distance between the cap-down 320 and the second lower edge 336 may be less than a distance between the cap-down 320 and the first lower edge 335. More specifically, a distance between the lower inclined surface 334 and the cap-down 320 may decrease from the first lower edge 335 toward the second lower edge 336. Accordingly, the vent plate 330 may have a cross-sectional shape with an upper side thickness that gradually increases toward the central axis C of the case 100

An angle of the lower inclined surface 334 with respect to the radial direction of the case 100 may range from 1° to 2°. If the angle of the lower inclined surface 334 is less than 1°, there is a problem in that deformation of the vent plate 330 due to stress generated during assembly of the vent plate 330 may not be sufficiently suppressed. When the angle of the lower inclined surface 334 is greater than 2°, the lower inclined surface 334 may be in direct contact with the cap-down 320.

A ratio of a width W2 of the lower inclined surface 334 to the distance L3 from the central axis of the case 100 to the hinge part 342 may be greater than or equal to 0.5. Here, the width W2 of the lower inclined surface 334 may refer to a difference between a distance L3 from the central axis C of the case 100 to the first lower edge 335 and a distance L4 from the central axis C of the case 100 to the second lower edge 336. That is, the width W2 of the lower inclined surface 334 may be greater in size than 50% of a radius of the vent plate 330.

In the present embodiment, as the first lower edge 335 is connected to the hinge part 342, the distance from the central axis of the case 100 to the hinge part 342 may be equal to the distance L3 from the central axis C of the case 100 to the first lower edge 335.

In the present embodiment, the distance L4 from the central axis C of the case 100 to the second lower edge 336 may be variously changed in design within a range greater than a radius of the contact part 350 and less than 50% of the radius of the vent plate 330. The distance L4 from the central axis C of the case 100 to the second lower edge 336 being equal to the radius of the contact part 350 may indicate that the second lower edge 336 is in contact with the contact part 350. As the second lower edge 336 is spaced apart from the central axis C of the case 100 by the contact part 350, the ratio of the width W2 of the lower inclined surface 334 to the distance from the central axis C of the case 100 to the hinge part 342 may be less than 1.

Hereinafter, a secondary battery 2 according to a sixth embodiment of the present disclosure will be described.

The secondary battery 2 according to the present embodiment may be configured to be different from the secondary batteries 2 according to the first to fifth embodiments of the present disclosure only in a detailed configuration of a vent plate 330. Accordingly, in describing the secondary battery 2 according to the present embodiment, only the detailed configuration of the vent plate 330, which is different from that in the secondary battery 2 according to the first to fifth embodiments of the present disclosure, will be described. For the remaining components of the secondary battery 2 according to the present embodiment, the description of the secondary batteries 2 according to the first to fifth embodiments of the present disclosure may be applied without modification.

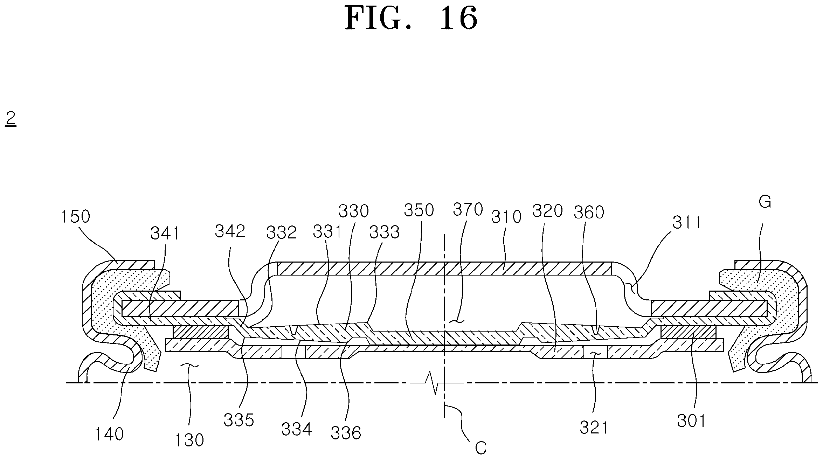

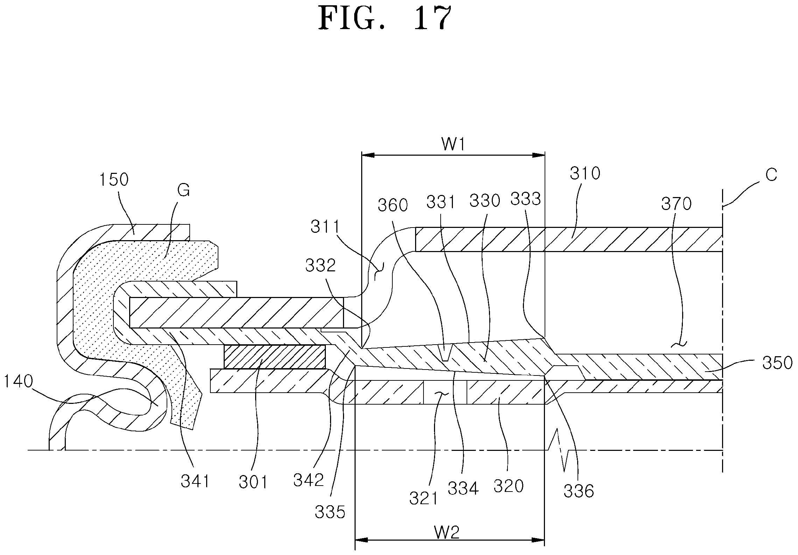

FIG. 16 is a cross-sectional view schematically illustrating a configuration of a cap assembly 300 according to the sixth embodiment of the present disclosure, and FIG. 17 is an enlarged view schematically illustrating a configuration of the vent plate 330 according to the sixth embodiment of the present disclosure.

Referring to FIGS. 16 and 17, the vent plate 330 according to the present embodiment may be configured to include both an upper inclined surface 331 and a lower inclined surface 334.

The upper inclined surface 331 according to the present embodiment may be configured the same as any one of the upper inclined surfaces 331 according to the first to fourth embodiments of the present disclosure.

The lower inclined surface 334 according to the present embodiment may be configured the same as the lower inclined surface 334 according to the fifth embodiment of the present disclosure.

According to the present disclosure, a vent plate 330 is configured to have a thickness that gradually increases in a radial direction of a case 300, thereby preventing deformation of the vent plate 330 due to stress generated during assembly of a secondary battery 2.

According to the present disclosure, the consistency and reliability of operation can be secured even when the vent plate 330 deforms or fractures due to an increase in the internal pressure of the secondary battery 2 caused by an overcurrent or the like.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims.

## Claims

1. A secondary battery, comprising:
a case having an opening;
an electrode assembly accommodated in the case;
a cap-up in the opening;
a cap-down facing the cap-up and connected to the electrode assembly;
a vent plate between the cap-up and the cap-down;
an extension part extending from the vent plate and connected to the cap-up; and
a contact part that protrudes from the vent plate towards the cap-down and that is in contact with the cap-down,
wherein a thickness of at least a portion of the vent plate increases toward a central axis of the case.

2. The secondary battery as claimed in claim 1, wherein the vent plate faces the cap-up and comprises an upper inclined surface that is inclined with respect to a radial direction of the case.

3. The secondary battery as claimed in claim 2, wherein an angle of the upper inclined surface with respect to the radial direction of the case ranges from 1° to 2°.

4. The secondary battery as claimed in claim 2 or 3, wherein the upper inclined surface comprises:
a first upper edge; and
a second upper edge between the central axis of the case and the first upper edge, wherein a distance between the upper inclined surface and the cap-up decreases from the first upper edge toward the second upper edge.

5. The secondary battery as claimed in claim 4, wherein the extension part comprises:
a support part that surrounds an end portion of the cap-up; and
a hinge part between the support part and the vent plate,
wherein the first upper edge is connected to the hinge part.

6. The secondary battery as claimed in claim 5, wherein:
a ratio of a width of the upper inclined surface to a distance from the central axis of the case to the hinge part ranges from 0.5 to 1, and
the width of the upper inclined surface is a difference between a distance from the central axis of the case to the first upper edge and a distance from the central axis of the case to the second upper edge.

7. The secondary battery as claimed in claim 4, 5 or 6, further comprising a notch that is concave from an outer side surface of the vent plate,
wherein a distance from the central axis of the case to the first upper edge is less than or equal to a distance from the central axis of the case to the notch.

8. The secondary battery as claimed in claim 7, further comprising a guide notch that is concave from the upper inclined surface and spaced apart from the notch.

9. The secondary battery as claimed in claim 8, wherein a distance from the central axis of the case to the guide notch is less than the distance from the central axis of the case to the notch.

10. The secondary battery as claimed in claim 8 or 9, wherein the vent plate comprises:
a first rupture part facing the notch; and
a second rupture part facing the guide notch,
wherein a thickness of the second rupture part is greater than a thickness of the first rupture part.

11. The secondary battery as claimed in claim 10, wherein a ratio of the thickness of the first rupture part to the thickness of the second rupture part ranges from 0.4 to 0.8.

12. The secondary battery as claimed in any preceding claim, wherein the vent plate faces the cap-down and comprises a lower inclined surface that is inclined with respect to a radial direction of the case.

13. The secondary battery as claimed in any preceding claim, further comprising a recess that is concave from the vent plate toward the contact part.

14. A battery pack, comprising:
a housing; and
a plurality of secondary batteries in the housing,
wherein each of the secondary batteries comprises a secondary battery according to any preceding claim.
